# EUROPÄISCHE PATENTSCHRIFT

(11) **EP 3 090 977 B1**
(45) Veröffentlichungstag und Bekanntmachung des Hinweises auf die Patenterteilung: **13.12.2017**
(21) Anmeldenummer: 15001365.4
(22) Anmeldetag: 07.05.2015
(51) Int. Cl.: B66C 17/04, B65G 61/00

(54) **HUBVORRICHTUNG**
LIFTING DEVICE
DISPOSITIF DE LEVAGE

(43) Veröffentlichungstag der Anmeldung: 09.11.2016
(73) Patentinhaber: Schelling Anlagenbau GmbH, 6858 Schwarzach (AT)
(72) Erfinder: Nesensohn, Martin, 6844 Altach (AT)
(74) Vertreter: Fechner, Thomas

(56) Entgegenhaltungen:
- EP-A1- 1 705 108
- DE-A1-102006 005 708
- US-A1- 2005 079 041

## Beschreibung

Die vorliegende Erfindung betrifft eine Hubvorrichtung zum Anheben und Absenken zumindest eines plattenförmigen Werkstücks mit zumindest einer heb- und senkbaren Aufnahmevorrichtung zum, insbesondere hängenden, lösbaren Befestigen des plattenförmigen Werkstücks an der Hubvorrichtung und mit zumindest einem ersten Paar Scherenarme und mit zumindest einem zweiten Paar Scherenarme, wobei die Scherenarme des ersten Paares an einem ersten Gelenkhalter der Hubvorrichtung um erste Schwenkachsen schwenkbar gelagert sind und die Scherenarme des zweiten Paares an einem zweiten Gelenkhalter der Hubvorrichtung um zweite Schwenkachsen schwenkbar gelagert sind und wobei die ersten Schwenkachsen bezüglich ihrer Lage relativ zueinander fix am ersten Gelenkhalter und die zweiten Schwenkachsen bezüglich ihrer Lage relativ zueinander fix am zweiten Gelenkhalter angeordnet sind.

Hubvorrichtungen dieser Art sind beim Stand der Technik grundsätzlich bekannt. Sie werden aufgrund der scherenförmigen Bewegung der Scherenarme auch als Scherenhubvorrichtungen bezeichnet. Sie werden dazu eingesetzt, plattenförmige Werkstücke, z.B. in einem Plattenlager, anzuheben und abzusenken. Zum Transport der plattenförmigen Werkstücke wird in der Regel die gesamte Hubvorrichtung samt plattenförmigem Werkstück in zumindest einer Horizontalrichtung transportiert.

Beim Stand der Technik gibt es verschiedene Typen von solchen Hubvorrichtungen. Bei einer ersten bekannten Art solcher Hubvorrichtungen sind alle Scherenarme einander kreuzend angeordnet. Ihre Schwenkachsen müssen an den Enden der Gesamtabfolge der Scherenarme für die Hebe- und Senkbewegung relativ zueinander verschiebbar gelagert sein. Eine Hubvorrichtung dieser Art ist in der US 2005/0079041 A1 gezeigt. Die hierfür benötigten Linearführungen führen zu hohen Herstellungskosten und meist auch zu einem hohen Gewicht der Hubvorrichtung.

Beim Stand der Technik sind aber auch Hubvorrichtungen bekannt, bei denen lediglich zwei Scherenarme vorhanden sind. Diese Varianten von Hubvorrichtungen haben aber das Problem, dass sie eine relativ niedrige Stabilität aufweisen und in ihrer maximal möglichen Hubhöhe nicht erweiterbar sind, ohne dass die Ausdehnung der Hubvorrichtungen in Horizontalrichtung vergrößert wird. Hierdurch haben solche Hubvorrichtungen auch einen relativ großen Platzbedarf in Horizontalrichtung, wenn eine entsprechend große Hubhöhe erreicht werden soll.

Das Gleiche gilt für gattungsgemäße Hubvorrichtungen, bei denen zumindest ein erstes Paar Scherenarme und ein zweites Paar Scherenarme, also zumindest vier Scherenarme vorhanden sind. Diese Varianten sind zwar stabiler als die Varianten mit nur zwei Scherenarmen. Sie haben aber auch das Problem, dass eine große Hubhöhe zwangsweise mit einem relativ großen Platzbedarf in Horizontalrichtung erkauft werden muss.

Aufgabe der Erfindung ist es, eine gattungsgemäße Hubvorrichtung dahingehend zu verbessern, dass sie bei einem in Horizontalrichtung relativ geringen Platzbedarf trotzdem einen relativ großen Maximalhub in vertikaler Richtung zulässt.

Hierzu ist gemäß der Erfindung vorgesehen, dass die Scherenarme des ersten Paares unter Zwischenschaltung zumindest eines Scherenzwischenarmpaares schwenkbar mit den Scherenarmen des zweiten Paares verbunden sind und das zumindest eine Scherenzwischenarmpaar zwei einander kreuzend angeordnete Scherenzwischenarme aufweist.

Durch die Erfindung ist eine Hubvorrichtung geschaffen worden, die einerseits sehr stabil ausgeführt ist und damit auch größere und schwerere plattenförmige Werkstücke gegebenenfalls außerhalb ihres Schwerpunktes angreifen und dann anheben und/oder absenken kann. Andererseits erlauben es die einander kreuzend angeordneten Scherenzwischenarme aber auch, einen relativ großen vertikalen Maximalhub zu realisieren, ohne dies wie beim Stand der Technik durch einen sehr hohen Platzbedarf in Horizontalrichtung erkaufen zu müssen. Erfindungsgemäße Hubvorrichtungen können somit auch sehr platzsparend ausgeführt werden. Es können hierdurch relativ kleine Abmessungen in den Horizontalrichtungen realisiert werden, in denen die Hubvorrichtung gemeinsam mit dem Werkstück transportiert werden soll. Hierdurch ist es z.B. bei der Verwendung erfindungsgemäßer Hubvorrichtungen in Plattenlagern möglich, die plattenförmigen Werkstücke auch sehr nah am Rand des Plattenlagers anzuheben und abzusenken, wodurch ein Plattenlager auf seiner gesamten Fläche bzw. in seiner gesamten horizontalen Ausdehnung besser genutzt werden kann. Außerdem können durch den relativ geringen Platzbedarf erfindungsgemäßer Hubvorrichtungen in Horizontalrichtung auch relativ kleine Stapelplätze realisiert werden.

In bevorzugten Ausführungsvarianten der Erfindung ist die Hubvorrichtung so ausgebildet, dass die anzuhebenden und abzusenkenden plattenförmigen Werkstücke hängend an der Aufnahmevorrichtung befestigt werden. In anderen Worten befindet sich die gesamte Hubvorrichtung samt Aufnahmevorrichtung in diesen Ausgestaltungsformen in Betriebsstellung über dem plattenförmigen Werkstück. Grundsätzlich ist aber auch eine stehende Ausgestaltung der Hubvorrichtung möglich. In diesem Fall würde dann die Aufnahmevorrichtung samt restlicher Hubvorrichtung sich in der Betriebsstellung unterhalb des plattenförmigen Werkstücks befinden. Bei beiden Varianten erfolgt das Anheben und Absenken des plattenförmigen Werkstücks mittels der heb- und senkbaren Aufnahmevorrichtung aber bevorzugt jeweils ausschließlich in vertikaler Richtung. Hierfür weisen erfindungsgemäße Hubvorrichtungen zumindest einen Vertikalantrieb auf, mit dem die Aufnahmevorrichtung angehoben und abgesenkt werden kann. Dieser Vertikalantrieb sorgt auch für eine entsprechende scherenartige Bewegung der Scherenarme und der Scherenzwischenarme.

Erfindungsgemäße Hubvorrichtungen könnten auch als Scherenhubvorrichtungen bezeichnet werden. Der Vollständigkeit halber wird aber darauf hingewiesen, dass dies natürlich nicht bedeutet, dass mit den Scherenarmen etwas scherenartig geschnitten werden kann oder soll. Es ist vielmehr so, dass diese Bezeichnung daher kommt, dass die Scherenarme und die Scherenzwischenarme beim Anheben und Absenken der Aufnahmevorrichtung, vorzugsweise paarweise, eine scherenartige Bewegung relativ zueinander durchführen.

Die Aufnahmevorrichtung ist mit zumindest einem Mittel zur lösbaren Befestigung des plattenförmigen Werkstücks an der Aufnahmevorrichtung ausgerüstet. In bevorzugten Ausgestaltungsformen ist dieses Mittel zumindest ein an sich bekannter Saugnapf oder Vakuumgreifer, mit dem durch Anlegen von Unterdruck die plattenförmigen Werkstücke, wie an sich bekannt, an der Aufnahmevorrichtung befestigt werden können. Das Loslassen bzw. Lösen der Befestigung erfolgt dann durch einen entsprechenden Abbau des Unterdrucks. Dies ist an sich bekannt und muss nicht weiter erläutert werden.

Erfindungsgemäße Hubvorrichtungen sind in bevorzugten Ausgestaltungsformen an einem Träger befestigt, welcher es erlaubt, die Hubvorrichtung mit oder ohne daran befestigtem plattenförmigen Werkstück in Horizontalrichtung(en) zu transportieren. Ein solcher Träger kann als ein Wagen ausgeführt sein. Dieser kann z.B. Teil einer kranbahnähnlichen bzw. portalkranähnlichen Fahrträgerkonstruktion sein. So kann diese Fahrträgerkonstruktion z.B. Horizontalschienen aufweisen, entlang derer eine Brücke in einer ersten Horizontalrichtung verfahrbar ist, wobei der die Hubvorrichtung tragende Wagen dann entlang der Brücke in einer zweiten, vorzugweise zur ersten orthogonalen, Horizontalrichtung verfahrbar ist. Bei solchen Ausgestaltungsformen sorgt die erfindungsgemäße Hubvorrichtung für ein Anheben und Absenken der plattenförmigen Werkstücke, während der Transport in Horizontalrichtung(en) von Hubvorrichtungen samt daran befestigtem Werkstück anderweitig, z.B. mittels des Wagens bzw. der Fahrträgerkonstruktion an sich realisiert wird.

Insgesamt hat die Erfindung den Vorteil, dass die Hubvorrichtung in Horizontalrichtung einen sehr geringen Platzbedarf hat. Außerdem kann der in Vertikalrichtung maximal mögliche Hub ohne zusätzlichen Platzbedarf in Horizontalrichtung in einfacher Weise erweitert werden, indem man ein, zwei oder mehr Scherenzwischenpaare zusätzlich vorsieht. Mit der erfindungsgemäßen Hubvorrichtung wird eine ausgezeichnete Stabilität der Konstruktion erreicht. Außerdem sind erfindungsgemäße Hubvorrichtungen zu vergleichsweise geringen Kosten herstellbar, da sie keine Linearführungen für die Schwenkachsen benötigen.

Im Sinne eines möglichst geringen Platzbedarfes in Horizontalrichtung sehen bevorzugte Ausgestaltungsformen erfindungsgemäßer Hubvorrichtungen vor, dass sich zumindest ein Kreuzungspunkt der einander kreuzend angeordneten Scherenzwischenarme des Scherenzwischenarmpaares beim Verschwenken der Scherenarme des ersten Paares um die ersten Schwenkachsen ausschließlich entlang einer einzigen gedachten Geraden bewegt.

Im Sinne einer möglichst hohen Stabilität der Hubvorrichtung ist günstigerweise vorgesehen, dass die einander kreuzend angeordneten Scherenzwischenarme des Scherenzwischenarmpaares in ihrem Kreuzungspunkt mittels eines, vorzugsweise einachsigen, Gelenks gelenkig miteinander verbunden sind. Die ersten Schwenkachsen sind bevorzugt permanent in einem fixen Abstand oder sogar permanent an einem gemeinsamen Angriffspunkt am ersten Gelenkhalter angeordnet. In anderen Worten sind sie also nicht relativ zueinander bewegbar. Sie können bei der Ausbildung in einem gemeinsamen Angriffspunkt koaxial oder im Falle der Anordnung in einem permanent fixen Abstand zumindest parallel zueinander angeordnet sein. Das Gleiche gilt für die zweiten Schwenkachsen am zweiten Gelenkhalter. Auch diese können somit permanent an einem gemeinsamen Angriffspunkt oder permanent in einem fixen Abstand zueinander am zweiten Gelenkhalter angeordnet sein. Auch diese können koaxial oder zumindest parallel zueinander ausgerichtet sein.

Zur Erzielung eines möglichst großen maximal möglichen Vertikalhubes sehen bevorzugte Ausgestaltungsformen der Erfindung vor, dass die Scherenarme des ersten Paares unter Zwischenschaltung einer Abfolge mehrerer Scherenzwischenarmpaare schwenkbar mit den Scherenarmen des zweiten Paares verbunden sind und dass jedes der Scherenzwischenarmpaare jeweils zwei einander kreuzend angeordnete Scherenzwischenarme aufweist. Diese Scherenzwischenarme sind somit in Vertikalrichtung hintereinander bzw. in Serie zwischen den Scherenarmen des ersten Paares und den Scherenarmen des zweiten Paares angeordnet. Es ist aber genauso gut möglich, zur Erhöhung der Tragkraft oder der Stabilität der Hubvorrichtung mehrere erste Paare von Scherenarmen, mehrere Scherenzwischenarmpaare und/oder mehrere zweite Paare von Scherenarmen in Horizontalrichtung hintereinander anzuordnen. Diese hintereinander angeordneten ersten und zweiten Paare von Scherenarmen bzw. Scherenzwischenarmpaare können insbesondere mittels Gelenken miteinander verbunden sein, die besonders bevorzugt auf gemeinsamen Gelenkachsen sitzen.

Die Scherenarme des ersten Paares sind günstigerweise voneinander weg und aufeinander zu um die ersten Schwenkachsen am ersten Gelenkhalter schwenkbar gelagert, vorzugsweise ohne einander in irgendeiner Stellung zu kreuzen. Das Gleiche gilt bevorzugt auch für die Scherenarme des zweiten Paares. Auch diese sind somit günstigerweise, vorzugsweise ohne einander in irgendeiner Stellung zu kreuzen, voneinander weg und aufeinander zu, um die zweiten Schwenkachsen am zweiten Gelenkhalter schwenkbar gelagert.

Wird ein plattenartiges Werkstück außerhalb seines Schwerpunktes an der Aufnahmevorrichtung befestigt, so führt dies beim Anheben des plattenförmigen Werkstücks zu einer horizontalen Kraftkomponente, welche in der Hubvorrichtung aufgenommen werden muss. Dies soll bevorzugt geschehen, ohne dass dabei die Hubvorrichtung bzw. deren Scherenarme und Scherenzwischenarme in Horizontalrichtung ausgelenkt werden. Hierzu sehen bevorzugte Ausgestaltungsformen der Erfindung vor, dass die Scherenarme des ersten Paares über eine mechanische Kopplung ihrer am ersten Gelenkhalter schwenkbar gelagerten Enden bezüglich ihrer Schwenkwinkel miteinander zwangsgekoppelt sind und/oder die Scherenarme des zweiten Paares über eine mechanische Kopplung ihrer am zweiten Gelenkhalter schwenkbar gelagerten Enden bezüglich ihrer Schwenkwinkel miteinander zwangsgekoppelt sind. Besonders günstig ist es dabei, wenn zur mechanischen Kopplung an den, am ersten Gelenkhalter schwenkbar gelagerten, Enden der Scherenarme des ersten Paares jeweils zumindest ein Zahnrad oder Zahnradsektor fixiert, vorzugsweise angeformt, ist, und/oder dass zur mechanischen Kopplung an den, am zweiten Gelenkhalter schwenkbar gelagerten, Enden der Scherenarme des zweiten Paares jeweils zumindest ein Zahnrad oder Zahnradsektor fixiert, vorzugsweise angeformt, ist. Bevorzugte Ausgestaltungsformen sehen dabei wiederum vor, dass die an den Enden der Scherenarme des ersten Paares jeweils fixierten, vorzugsweise angeformten, Zahnräder oder Zahnradsektoren zur Zwangskopplung der Schwenkwinkel der Scherenarme des ersten Paares direkt oder indirekt ineinander greifen, und/oder dass die an den Enden der Scherenarme des zweiten Paares jeweils fixierten, vorzugsweise angeformten, Zahnräder oder Zahnradsektoren zur Zwangskopplung der Schwenkwinkel der Scherenarme des zweiten Paares direkt oder indirekt ineinander greifen. Ein direktes Ineinandergreifen der Zahnräder bzw. Zahnradsektoren ist dann gegeben, wenn die Zähne der Zahnräder bzw. Zahnradsektoren direkt ineinander eingreifen. Bei einem indirekten Ineinandergreifen können zusätzliche Zahnräder oder Zahnradsektoren oder andere mechanische Übertragungsglieder wie z.B. Ketten oder dergleichen, in Wirkverbindung zwischen den Zahnrädern oder Zahnradsektoren angeordnet sein.

Günstig ist es wiederum, wenn die Scherenarme des ersten Paares über, vorzugsweise einachsige, Gelenke schwenkbar mit den Scherenzwischenarmen des Scherenzwischenarmpaares oder eines der Scherenzwischenarmpaare verbunden sind, und/oder dass die Scherenarme des zweiten Paares über, vorzugsweise einachsige, Gelenke schwenkbar mit den Scherenzwischenarmen des Scherenzwischenarmpaares oder eines der Scherenzwischenarmpaare verbunden sind, und/oder dass die Scherenzwischenarme eines der Scherenzwischenarmpaare über, vorzugsweise einachsige, Gelenke schwenkbar mit den Scherenzwischenarmen eines anschließenden der Scherenzwischenarmpaare verbunden sind.

Besonders bevorzugt ist vorgesehen, dass alle Gelenke, um die die Scherenarme des ersten Paares und die Scherenarme des zweiten Paares und die Scherenzwischenarme des Scherenzwischenarmpaares oder der Scherenzwischenarmpaare schwenkbar sind, als einachsige Gelenke und/oder mit zueinander parallelen Schwenkachsen ausgeführt sind.

Um die plattenförmigen Werkstücke nicht nur anheben und absenken sondern auch um eine vertikale Achse drehen zu können, sehen bevorzugte Ausgestaltungsformen erfindungsgemäßer Hubvorrichtungen vor, dass die Hubvorrichtung zumindest eine Drehvorrichtung zum Drehen zumindest der Aufnahmevorrichtung um eine vertikale Drehachse aufweist. Hierbei kann vorgesehen sein, dass die Drehvorrichtung ausschließlich die Aufnahmevorrichtung und das gegebenenfalls daran befestigte plattenförmige Werkstück um die Vertikalachse dreht und die restliche Hubvorrichtung nicht um die Vertikalachse gedreht wird. In diesen Ausgestaltungsformen ist die Drehvorrichtung dann günstigerweise zwischen dem der Aufnahmevorrichtung zugewandten Gelenkhalter und der Aufnahmevorrichtung angeordnet. Die Drehvorrichtung kann aber auch am anderen Ende der Hubvorrichtung angeordnet sein. Dann werden sowohl der erste als auch der zweite Gelenkhalter und auch alle dazwischen angeordneten Scherenarme und Scherenzwischenarme gemeinsam mit der Aufnahmevorrichtung und dem daran gegebenenfalls befestigten plattenförmigen Werkstück um die Vertikalachse gedreht.

Weitere Merkmale und Einzelheiten bevorzugter Ausgestaltungsformen der Erfindung werden nachfolgend anhand der Figuren erläutert. Dabei zeigen:
Fig. 1 und 2 schematische Darstellungen zum gattungsgemäßen Stand der Technik;
Fig. 3 bis 7 ein erstes erfindungsgemäßes Ausführungsbeispiel;
Fig. 8 bis 11 eine alternative erfindungsgemäße Ausgestaltungsform;
Fig. 12 bis 15 eine erfindungsgemäße Möglichkeit zur Erweiterung des maximalen Vertikalhubes;
Fig. 16 und 17 Detaildarstellungen im Bereich des ersten Gelenkhalters, wie sie in den ersten drei Ausführungsbeispielen erfindungsgemäßer Hubvorrichtungen zum Einsatz kommt und
Fig. 18 und 19 eine zu den Fig. 16 und 17 alternative Variante.

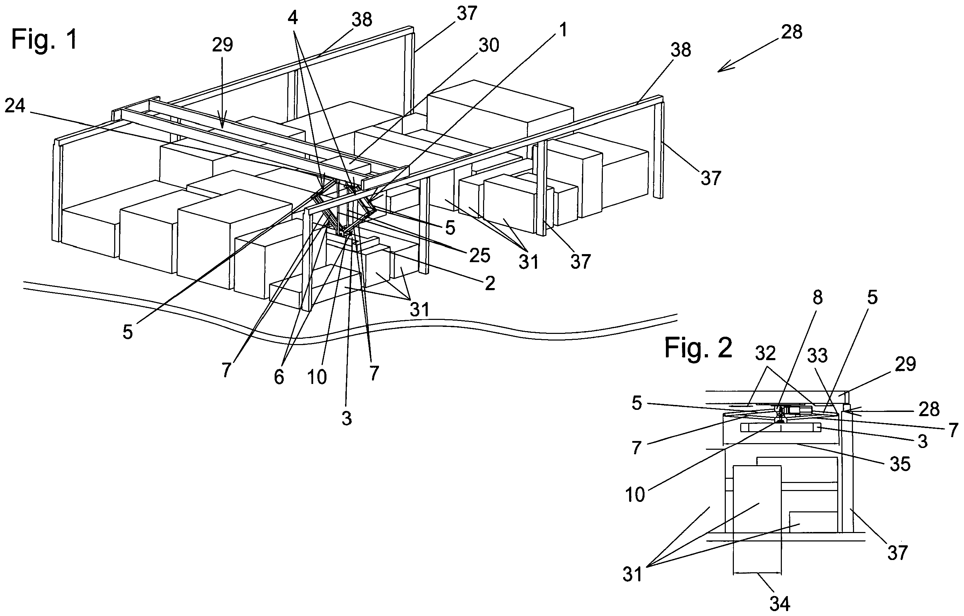

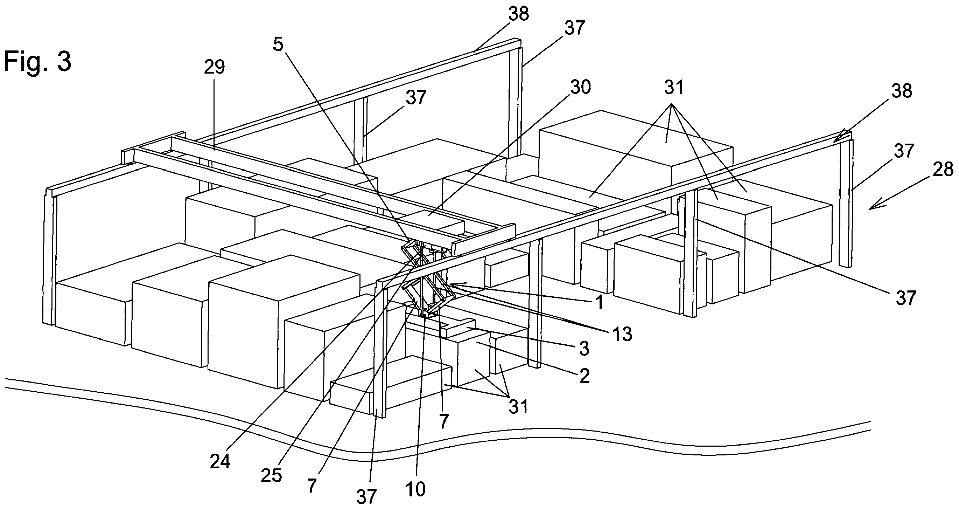

Die beim Stand der Technik an sich bekannten Gemeinsamkeiten der Fig. 1 und 3 werden zunächst im Sinne einer ökonomischen Darstellung gemeinsam beschrieben. Erst anschließend wird auf die erfindungsgemäßen Unterschiede eingegangen.

In beiden schematischen Darstellungen gemäß Fig. 1 und 3 dient die Hubvorrichtung 1 dazu, an der Aufnahmevorrichtung 3 befestigte plattenförmige Werkstücke 2 anheben und auch absenken zu können, also in Vertikalrichtung zu bewegen. Um die Hubvorrichtung 1 samt daran befestigtem plattenförmigen Werkstück 2 auch in Horizontalrichtung transportieren zu können, ist jeweils eine Fahrträgerkonstruktion 28 vorgesehen. Diese umfasst in den gezeigten Darstellungen jeweils auf Vertikalstützen 37 gelagerte Horizontalschienen 38 entlang derer eine Brücke 29 hin und her verfahrbar ist. Entlang der Brücke 29 kann wiederum ein Wagen 30 hin und her verfahren werden, an welchem die jeweilige Hubvorrichtung 1 angeordnet bzw. aufgehängt ist. Dies ermöglicht es, einzelne Werkstücke 2 mittels der Hubvorrichtung 1 anzuheben, in Horizontalrichtung zu verfahren und dann wieder abzusenken bzw. abzulegen. So können die Werkstücke 2 zwischen den verschiedenen Plattenstapeln 31 hin und her bewegt werden. Die plattenförmigen Werkstücke 2 können innerhalb des Arbeitsbereiches dieser Gesamtkonstruktion auch auf hier nicht dargestellte, an sich bekannte Abtransporteinrichtungen wie z.B. Luftkissenbahnen, Rollenbahnen und dergleichen abgelegt oder von entsprechenden Antransporteinrichtungen abgenommen und auf die entsprechenden Stapel 31 verbracht werden.

Die Hubvorrichtungen 1 selbst weisen jeweils zumindest ein erstes Paar 4 Scherenarme 5 und jeweils zumindest ein zweites Paar 6 Scherenarme 7 auf. Die Scherenarme 5 des ersten Paares 4 sind an einem ersten Gelenkhalter 8 der Hubvorrichtung 1 um erste Schwenkachsen 9 schwenkbar gelagert. Die Scherenarme 7 des jeweiligen zweiten Paares 6 sind an einem zweiten Gelenkhalter 10 der Hubvorrichtung 1 um zweite Schwenkachsen 11 schwenkbar gelagert. Hierbei ist darauf hinzuweisen, dass sowohl beim Stand der Technik gemäß Fig. 1 als auch bei der erfindungsgemäßen Ausgestaltung gemäß Fig. 3 die ersten Schwenkachsen 9 bezüglich ihrer Lage relativ zueinander fix am ersten Gelenkhalter 8 und die zweiten Schwenkachsen 11 bezüglich ihrer Lage relativ zueinander fix am zweiten Gelenkhalter 10 angeordnet sind. Bei der Ausgestaltungsform gemäß des Standes der Technik sind jeweils zwei erste und zweite Paare 4 und 6 von Scherenarmen 5 und 7 in Horizontalrichtung hintereinander ausgebildet. Bei der erfindungsgemäßen Ausgestaltungsform gemäß Fig. 3 ist jeweils nur ein erstes Paar 4 Scherenarme 5 und ein zweites Paar 6 Scherenarme 7 vorgesehen. Diese Scherenarme 5 und 7 sind plattenartig ausgebildet. Dies muss aber nicht zwingend so sein, auch bei der Erfindung können in Horizontalrichtung mehrere erste Paare 4 und/oder zweite Paare 6 von Scherenarmen 5 und 7 hintereinander angeordnet sein.

Zum Anheben und Absenken der Aufnahmevorrichtung 3, gegebenenfalls mit einem daran befestigten plattenförmigen Werkstück 2, sind jeweils Vertikalantriebe 24 vorgesehen. Im gezeigten Ausführungsbeispiel weisen diese Hubriemen 25 auf. Durch motorgetriebenes Aufwickeln oder Abwickeln der Hubriemen 25 von entsprechenden Trommeln wird der vertikale Abstand zwischen dem ersten Gelenkhalter 8 und dem zweiten Gelenkhalter 10 zum Anheben und Absenken der Aufnahmevorrichtung 3 verändert. Natürlich können bei der Erfindung auch andere Vertikalantriebe 24 zum Einsatz kommen. Als Beispiele hierfür können Schneckengetriebe, Kettengetriebe, elektrische, hydraulische oder pneumatische Teleskopantriebe oder dergleichen genannt werden, ohne dass dies eine vollständige Aufzählung der Möglichkeiten wäre, wie entsprechende Vertikalantriebe 24 ausgeführt werden könnten. Der Vertikalantrieb muss auch nicht zwingend an den Gelenkhaltern 8 und 10 angreifen. Es ist z.B. auch möglich, dass der Vertikalantrieb an einem der Gelenkhalter 8 oder 10 und an zumindest einem der Scherenarme 5, 7 oder zumindest einem der Scherenzwischenarme 13, vorzugsweise gelenkig, angreift bzw. zwischen diesen Bauteilen angeordnet ist und/oder wirkt. Es ist aber z.B. auch möglich, dass der Vertikalantrieb an zwei verschiedenen Scherenarmen 5, 7 und/oder Scherenzwischenarmen 13, vorzugsweise gelenkig, angreift bzw. zwischen diesen Bauteilen angeordnet ist und/oder wirkt. Insbesondere bei diesen alternativen Ausgestaltungsformen können als Vertikalantriebe Linearantriebe wie z.B. hydraulische oder pneumatische Kolben-Zylinderanordnungen zum Einsatz kommen.

Beim Stand der Technik gemäß der Fig. 1 und 2 ist der in Vertikalrichtung maximal mögliche Hub der Aufnahmevorrichtung 3 letztendlich durch die Länge der Scherenarme 5 und 7 vorgegeben. Will man den in Vertikalrichtung maximal möglichen Hub vergrößern, so geht dies nur mittels einer entsprechend langen Ausgestaltung der Scherenarme 5 und 7, was zwangsweise zu einem größeren Platzbedarf in Horizontalrichtung führt. Zur Veranschaulichung dessen wird auf Fig. 2 verwiesen, in der der zweite Gelenkhalter 10 maximal nach oben hin zum ersten Gelenkhalter 8 gefahren ist, woraus sich aus der Länge der Scherenarme 5 und 7 beim Stand der Technik die Maximalabmessung 35 in Horizontalrichtung ergibt. Je größer diese Maximalabmessung 35 jedoch ist, desto schwieriger ist es, auch die Randbereiche der Fahrträgerkonstruktion 28 zu nutzen, um dort plattenförmige Werkstücke 2 auf- oder abzustapeln. Beim Stand der Technik führt eine Erhöhung des maximal möglichen Hubes in Vertikalrichtung somit zwangsweise dazu, dass man längere Scherenarme 5 und 7 verwenden muss, was zwangsweise wiederum zu einer Vergrößerung der Maximalabmessung 35 in Horizontalrichtung führt, womit es bei Bewegung in Fahrtrichtung 32 des Wagens 30 entlang der Brücke 29 und/oder der Brücke 29 entlang der Horizontalschienen 38 früher zur Kollision z.B. zwischen der Hubvorrichtung 1 und der Vertikalstütze 37 am Kollisionspunkt 33 oder der Hubvorrichtung 1 und einer Horizontalschiene 38 oder anderen an den Lagerplatz angrenzenden Gegenständen oder Gebäudeteilen wie z.B. Wänden kommen würde. Diese Kollisionen müssen natürlich verhindert werden, sodass der insgesamt nutzbare Flächenbereich kleiner wird, wenn man beim Stand der Technik längere Scherenarme 5 und 7 verwendet. Außerdem erhöht sich auch das sogenannte Schachtmaß 34. Dies bedeutet, dass die einzelnen Plattenstapel 31 dann bei entsprechend längeren Scherenarmen 5 und 7 auch weiter voneinander distanziert aufgestapelt werden müssen.

Um diese Nachteile zu vermeiden und trotzdem einen großen Maximalhub in Vertikalrichtung ermöglichen zu können, sieht die Erfindung vor, dass die Scherenarme 5 des ersten Paares 4 unter Zwischenschaltung zumindest eines Scherenzwischenarmpaares 12 schwenkbar mit den Scherenarmen 7 des zweiten Paares 6 verbunden sind und das zumindest eine Scherenzwischenarmpaar 12 zwei einander kreuzend angeordnete Scherenzwischenarme 13 aufweist. Im ersten Ausführungsbeispiel gemäß der Fig. 3 bis 7 einer erfindungsgemäßen Hubvorrichtung 1 ist in Vertikalrichtung gesehen genau ein Scherenzwischenarmpaar 12 zwischen den Scherenarmen 5 des ersten Paares 4 und den Scherenarmen 7 des zweiten Paares 6 angeordnet. In diesem Ausführungsbeispiel sind in Horizontalrichtung zwei Scherenzwischenarmpaare 12 hintereinander angeordnet. Jedes Scherenzwischenarmpaar 12 weist jedenfalls zwei einander kreuzend angeordnete Scherenzwischenarme 13 auf. Diese kreuzen sich in ihrem Kreuzungspunkt 14. In den bevorzugten, hier gezeigten erfindungsgemäßen Ausgestaltungsformen sind die beiden jeweils einander kreuzend angeordneten Scherenzwischenarme 13 eines jeden Scherenzwischenarmpaares 12 in ihrem Kreuzungspunkt 14 mittels eines Gelenks 16 gelenkig miteinander verbunden. Darüber hinaus ist auch jeder Scherenzwischenarm 13 über ein entsprechendes Gelenk 16 mit einem Scherenarm 5 des ersten Paares 4 und einem Scherenarm 7 des zweiten Paares 6 gelenkig verbunden. Die Scherenarme 5 sind mit ihren, dem ersten Gelenkhalter 8 zugewandten Enden 17 über jeweils ortsfest am Gelenkhalter 8 angeordnete Gelenke 16 am ersten Gelenkhalter 8 angeordnet und um die ersten Schwenkachsen 9, welche durch die entsprechenden Gelenke 16 ausgebildet sind, schwenkbar. Analoges gilt für die Anordnung der Enden 19 der Scherenarme 7 des zweiten Paares 6 am zweiten Gelenkhalter 10 mittels der dort die zweiten Schwenkachsen 11 realisierenden Gelenke 16. Bei allen Gelenken 16 handelt es sich bei den gezeigten Ausführungsbeispielen um Einachsgelenke. Die durch all diese Gelenke 16 realisierten Schwenkachsen, also auch die ersten Schwenkachsen 9 und die zweiten Schwenkachsen 11 sind parallel zueinander angeordnet. Dies gilt für alle Betriebsstellungen.

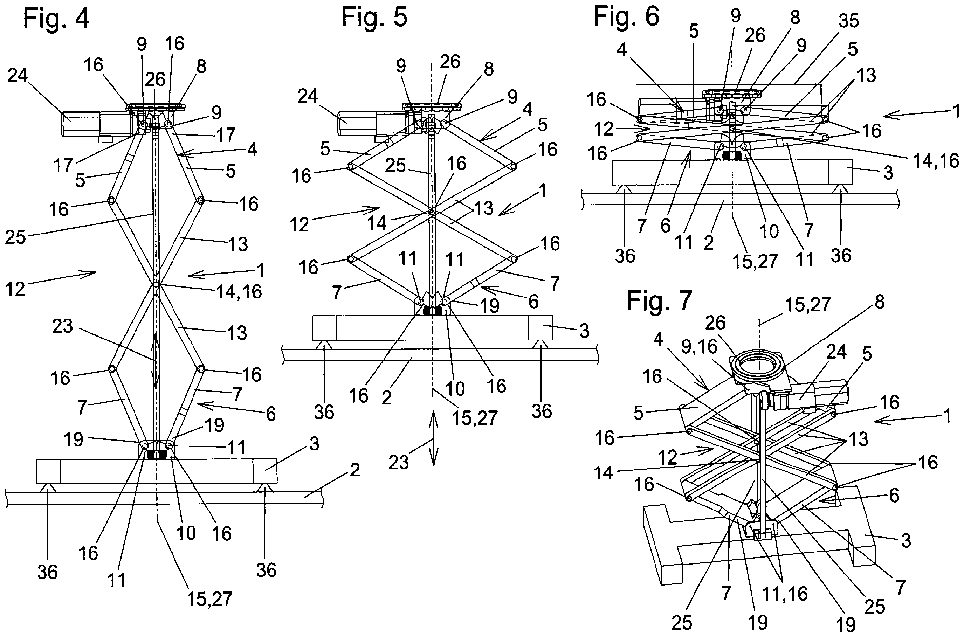

In den Fig. 4, 5 und 6 sind Seitenansichten auf dieses erste Ausführungsbeispiel einer erfindungsgemäßen Hubvorrichtung 1 gezeigt, wobei die Aufnahmevorrichtung 3 samt des daran mittels der Vakuumgreifer 36 gehaltenen plattenförmigen Werkstücks 2 in Fig. 4 in Vertikalrichtung 23 relativ weit abgesenkt ist. In Fig. 5 sind die Aufnahmevorrichtungen 3 und das plattenförmige Werkstück 2 ein Stück weiter angehoben. In Fig. 6 ist die maximal nach oben gezogene Stellung gezeigt. Beim Anheben und Absenken verkleinert bzw. vergrößert sich jeweils der Abstand in vertikaler Richtung 23 zwischen den Gelenkhaltern 8 und 10. Im gezeigten Ausführungsbeispiel wird für diese Hub- und Absenkbewegung der Vertikalantrieb 24 in Betrieb gesetzt. Er wickelt die jeweils in Vertikalrichtung verlaufenden Hubriemen 25 entsprechend auf und ab, sodass der am vom Vertikalantrieb 24 abgewandten Ende des Hubriemens 25 befestigte zweite Gelenkhalter 10 samt Aufnahmevorrichtung und daran gegebenenfalls befestigtem plattenförmigen Werkstück 2 angehoben oder entsprechend abgesenkt wird. Diese Art von Vertikalantrieben 24 ist an sich bekannt und muss nicht weiter beschrieben werden. Sie kann, wie eingangs bereits erläutert, auch durch andere geeignete Vertikalantriebe ersetzt werden. Durch Vergleich der Fig. 4 bis 6 ist gut zu sehen, dass sich der Kreuzungspunkt 14 der einander kreuzend angeordneten Scherenzwischenarme 13 des Scherenzwischenarmpaares 12 beim Verschwenken der Scherenarme 5 des ersten Paares 4 um die ersten Schwenkachsen und damit bei einer Hub- oder Absenkbewegung ausschließlich entlang einer einzigen gedachten Geraden 15 bewegen. Das Gleiche gilt für die Relativbewegung zwischen erstem Gelenkhalter 8 und zweitem Gelenkhalter 10 beim Anheben und Absenken der am zweiten Gelenkhalter 10 befestigten Aufnahmevorrichtung 3. Natürlich werden beim Anheben und Absenken auch die Scherenarme 7 des zweiten Paares 6 und die Scherenzwischenarme entsprechend verschwenkt.

In den gezeigten, bevorzugten Ausgestaltungsformen ist es jedenfalls so, dass der erste Gelenkhalter 8 in allen Betriebsstellungen der Hubvorrichtung 1 immer über dem zweiten Gelenkhalter 10 und der zweite Gelenkhalter 10 in allen Betriebsstellungen der Hubvorrichtung 1 immer über der Aufnahmevorrichtung 3 angeordnet ist. Der erste Gelenkhalter 8 und der zweite Gelenkhalter 10 werden beim Anheben und Absenken der Aufnahmevorrichtung relativ zueinander ausschließlich in den vertikalen Richtungen 23 bewegt. Sie sind, wie gesagt, über den zumindest einen Vertikalantrieb 24 miteinander gekoppelt.

Fig. 7 zeigt noch eine perspektivische Darstellung von schräg oben auf dieses erste Ausführungsbeispiel der Hubvorrichtung 1.

Um das plattenförmige Werkstück 2, welches an der Aufnahmevorrichtung 3 lösbar befestigt ist, nicht nur anheben und absenken zu können, sondern auch um eine vertikale Drehachse 27 drehen zu können, ist im ersten Ausführungsbeispiel der Hubvorrichtung 1 eine hier nur schematisch dargestellte zwischen dem ersten Gelenkhalter 8 und dem Wagen 30 angeordnete und wirkende Drehvorrichtung 26 vorgesehen. Mit dieser kann die gesamte in den Fig. 4 bis 7 dargestellte Hubvorrichtung 1 zusammen mit dem an der Aufnahmevorrichtung 3 lösbar befestigten plattenförmigen Werkstück 2 um die vertikale Drehachse 27 gedreht werden. Dabei werden in dieser Ausführungsform also auch beide Gelenkhalter 8 und 10 und auch alle Scherenarme 5 und 7 sowie Scherenzwischenarme 13 mit um die vertikale Drehachse 27 gedreht. Als Drehvorrichtung 26 können dabei an sich bekannte Zahnradgetriebe oder andere Drehvorrichtungen eingesetzt werden. Dies ist hier nicht im Detail dargestellt.

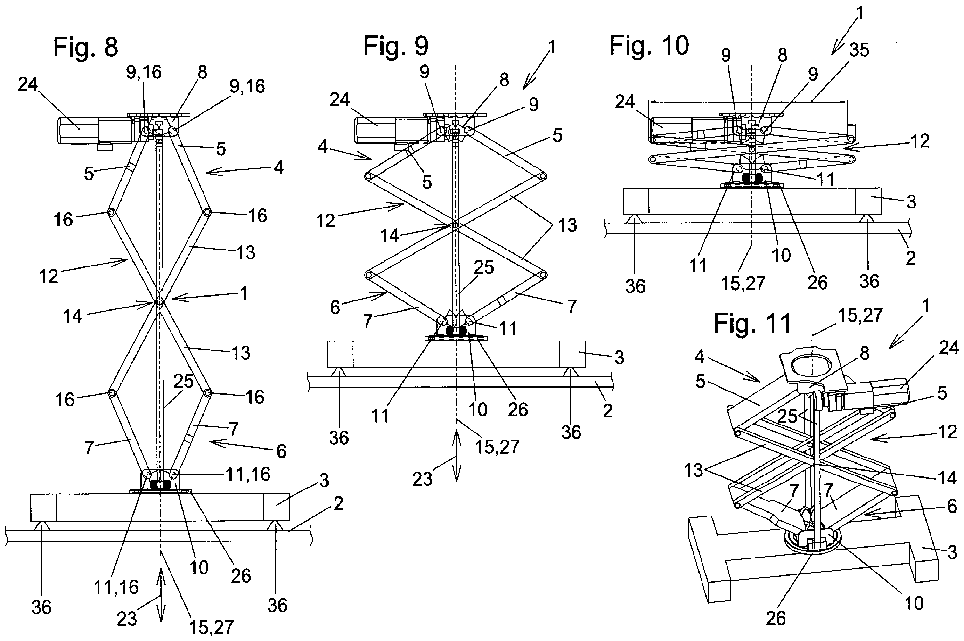

Im zweiten erfindungsgemäßen Ausführungsbeispiel gemäß der Fig. 8 bis 11 ist die Drehvorrichtung 26 nicht zwischen dem Wagen 30 und dem ersten Gelenkhalter 8 sondern zwischen dem zweiten Gelenkhalter 10 und der Aufnahmevorrichtung 3 angeordnet. Dies hat zur Folge, dass bei einem Drehen der Aufnahmevorrichtung 3 samt daran lösbar befestigtem Werkstück 2 um die vertikale Drehachse 27 sich die restliche Hubvorrichtung 1 also insbesondere die Scherenarme 5 und 7 und die Zwischenscherenarme 13 nicht um die vertikale Drehachse 27 mitdrehen sondern in ihrer Position verbleiben. Gedreht wird hier nur die Aufnahmevorrichtung 3 und das daran gegebenenfalls befestigte plattenförmige Werkstück 2.

Bis auf diesen genannten Unterschied bei der Anordnung der Drehvorrichtung 26 ist dieses zweite erfindungsgemäße Ausführungsbeispiel gemäß der Fig. 8 bis 11 genauso ausgebildet, wie das erste Ausführungsbeispiel gemäß der Fig. 3 bis 7, sodass, um entsprechende Wiederholungen zu vermeiden, bezüglich aller anderen Merkmale dieses zweiten Ausführungsbeispieles auf das erste Ausführungsbeispiel verwiesen wird.

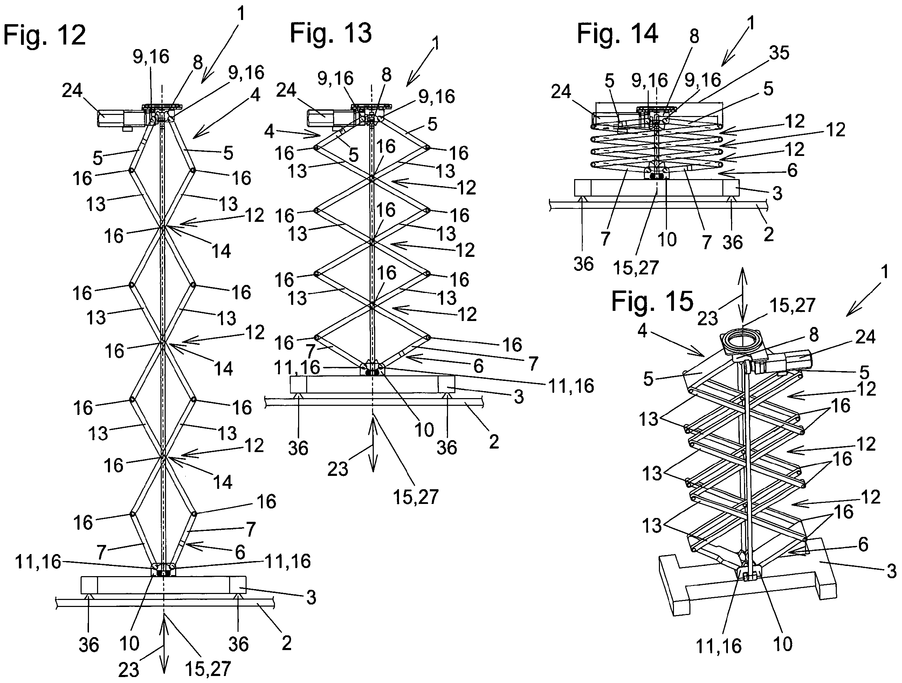

Auch das dritte erfindungsgemäße Ausführungsbeispiel einer Hubvorrichtung 1, wie es in den Fig. 12 bis 15 dargestellt ist, basiert auf dem ersten Ausführungsbeispiel gemäß der Fig. 3 bis 7. Im dritten Ausführungsbeispiel wurde allerdings der maximal mögliche Hub dahingehend vergrößert, dass nicht nur ein Scherenzwischenarmpaar 12 sondern drei Scherenzwischenarmpaare 12 in Vertikalrichtung 23 hintereinander angeordnet sind. Durch eine entsprechende Anzahl von zusätzlichen Scherenzwischenarmpaaren 12 kann, wie in diesem dritten Ausführungsbeispiel veranschaulicht, der maximal mögliche Vertikalhub nahezu beliebig vergrößert werden, ohne dass dies zu einer Vergrößerung des Platzbedarfes bzw. der Maximalabmessung 35 in Horizontalrichtung führt. Ansonsten gilt auch für dieses dritte Ausführungsbeispiel das für das erste Ausführungsbeispiel Gesagte, sodass auch hier auf Wiederholungen in der Beschreibung verzichtet wird.

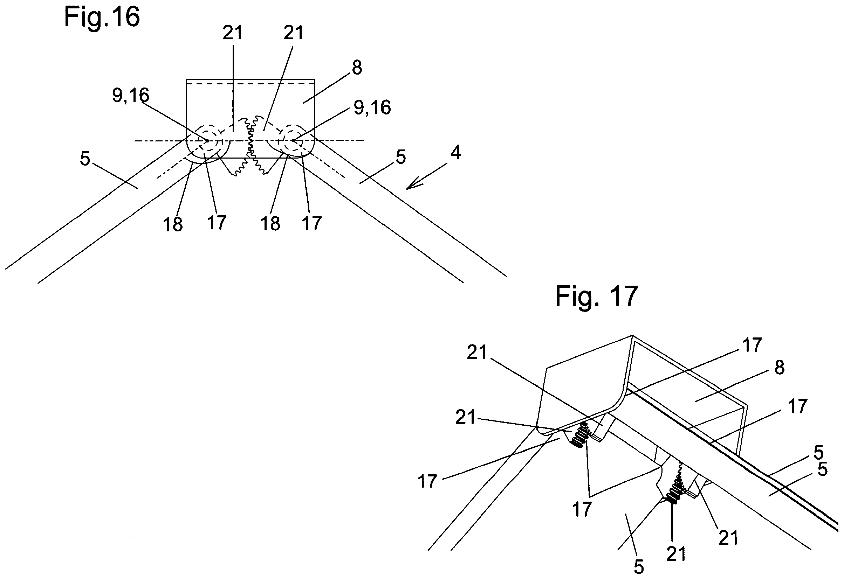

Die Fig. 16 und 17 zeigen nun noch die in den geschilderten drei erfindungsgemäßen Ausführungsbeispielen der Erfindung realisierte mechanische Kopplung der Scherenarme 5 des ersten Paares 4 über ihre am ersten Gelenkhalter 8 schwenkbar gelagerten Enden 17 bezüglich ihrer Schwenkwinkel 18 miteinander. Diese Zwangskopplung bewirkt, dass beide Scherenarme 5 jeweils nur um denselben Schwenkwinkel 18 um die ersten Schwenkachsen 9 verschwenkt werden können. Hierzu sind an den Enden 17 der beiden Scherenarme 5 eines ersten Paares 4 jeweils Zahnradsektoren 21 fixiert. Jeder dieser Zahnradsektoren 21 ist am jeweiligen Ende 17 des Scherenarmes 5 so fixiert, dass es relativ zum Scherenarm 5 an dem es fixiert ist, keine Schwenkbewegung ausführen kann. Die beiden Zahnradsektoren 21 greifen mit ihren Zahnrädern direkt ineinander ein, wodurch die gewünschte Zwangskopplung bezüglich der Schwenkwinkel 18 realisiert ist. Bevorzugt ist vorgesehen, dass an den gegenüberliegenden Enden 19 der Scherenarme 7 der zweiten Paare 6 entsprechende Zahnradsektoren 21 entsprechend fix an den jeweiligen Enden 19 angeordnet sind und ineinander greifen. Die so realisierte Zwangskopplung bewirkt, dass die Aufnahmevorrichtung 3 samt daran befestigtem plattenförmigen Werkstück 2 auch dann nicht gegen die Horizontale kippen kann, wenn ein plattenförmiges Werkstück 2 außerhalb seines Schwerpunktes an der Aufnahmevorrichtung 3 befestigt wird. Außerhalb des Schwerpunktes bedeutet dabei, dass der Schwerpunkt des plattenförmigen Werkstücks 2 nicht vertikal unter der Gerade 15 bzw. der vertikalen Drehachse 27 zu liegen kommt.

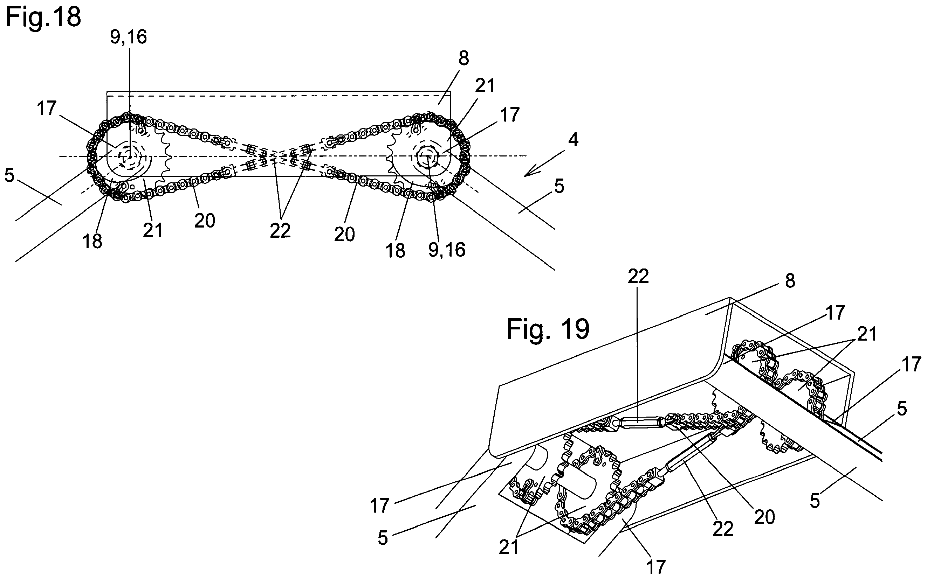

Eine alternative Form der Zwangskopplung der Scherenarme 5 bzw. 7 bezüglich ihrer Schwenkwinkel 18 ist noch in den Fig. 18 und 19 gezeigt. Hier greifen die Zahnräder 21 nicht direkt sondern indirekt über die Ketten 20 ineinander ein. Die Ketten können über die Spanneinrichtung 22 gespannt werden. Außerdem handelt es sich hier nicht um Zahnradsektoren sondern, wie gesagt, um Zahnräder 21. Die Zwangskopplung der jeweiligen Scherenarme 5 bzw. 7 eines ersten oder zweiten Paares 4 oder 6 bezüglich ihres Schwenkwinkels 18 kann natürlich auch in anderer Art und Weise erfolgen. Zwischen den Zahnrädern bzw. Zahnradsektoren 21 können natürlich auch entsprechende Zahnradgetriebe oder dergleichen angeordnet sein.

**Legende zu den Hinweisziffern:**

| | | | |
|---|---|---|---|
| 1 | Hubvorrichtung | 20 | Kette |
| 2 | Werkstück | 21 | Zahnrad oder Zahnradsektor |
| 3 | Aufnahmevorrichtung | 22 | Spanneinrichtung |
| 4 | erstes Paar | 23 | vertikaler Richtung |
| 5 | Scherenarm | 24 | Vertikalantrieb |
| 6 | zweites Paar | 25 | Hubriemen |
| 7 | Scherenarm | 26 | Drehvorrichtung |
| 8 | Gelenkhalter | 27 | vertikale Drehachse |
| 9 | erste Schwenkachse | 28 | Fahrträgerkonstruktion |
| 10 | zweiter Gelenkhalter | 29 | Brücke |
| 11 | zweite Schwenkachse | 30 | Wagen |
| 12 | Scherenzwischenarmpaar | 31 | Plattenstapel |
| 13 | Scherenzwischenarm | 32 | Fahrtrichtung |
| 14 | Kreuzungspunkt | 33 | Kollisionspunkt |
| 15 | Gerade | 34 | Schachtmaß |
| 16 | Gelenk | 35 | Maximalabmessung |
| 17 | Ende | 36 | Vakuumgreifer |
| 18 | Schwenkwinkel | 37 | Vertikalstütze |
| 19 | Ende | 38 | Horizontalschiene |

## Patentansprüche

1. Hubvorrichtung (1) zum Anheben und Absenken zumindest eines plattenförmigen Werkstücks (2) mit zumindest einer heb- und senkbaren Aufnahmevorrichtung (3) zum, insbesondere hängenden, lösbaren Befestigen des plattenförmigen Werkstücks (2) an der Hubvorrichtung (1) und mit zumindest einem ersten Paar (4) Scherenarme (5) und mit zumindest einem zweiten Paar (6) Scherenarme (7), wobei die Scherenarme (5) des ersten Paares (4) an einem ersten Gelenkhalter (8) der Hubvorrichtung (1) um erste Schwenkachsen (9) schwenkbar gelagert sind und die Scherenarme (7) des zweiten Paares (6) an einem zweiten Gelenkhalter (10) der Hubvorrichtung (1) um zweite Schwenkachsen (11) schwenkbar gelagert sind und wobei die ersten Schwenkachsen (9) bezüglich ihrer Lage relativ zueinander fix am ersten Gelenkhalter (8) und die zweiten Schwenkachsen (11) bezüglich ihrer Lage relativ zueinander fix am zweiten Gelenkhalter (10) angeordnet sind, **dadurch gekennzeichnet, dass** die Scherenarme (5) des ersten Paares (4) unter Zwischenschaltung zumindest eines Scherenzwischenarmpaares (12) schwenkbar mit den Scherenarmen (7) des zweiten Paares (6) verbunden sind und das zumindest eine Scherenzwischenarmpaar (12) zwei einander kreuzend angeordnete Scherenzwischenarme (13) aufweist.

2. Hubvorrichtung (1) nach Anspruch 1, **dadurch gekennzeichnet, dass** sich zumindest ein Kreuzungspunkt (14) der einander kreuzend angeordneten Scherenzwischenarme (13) des Scherenzwischenarmpaares (12) beim Verschwenken der Scherenarme (5) des ersten Paares (4) um die ersten Schwenkachsen (9) ausschließlich entlang einer einzigen gedachten Geraden (15) bewegt.

3. Hubvorrichtung (1) nach Anspruch 1 oder 2, **dadurch gekennzeichnet, dass** die einander kreuzend angeordneten Scherenzwischenarme (13) des Scherenzwischenarmpaares (12) in ihrem Kreuzungspunkt (14) mittels eines, vorzugsweise einachsigen, Gelenks (16) gelenkig miteinander verbunden sind.

4. Hubvorrichtung (1) nach einem der Ansprüche 1 bis 3, **dadurch gekennzeichnet, dass** die ersten Schwenkachsen (9) permanent an einem gemeinsamen Angriffspunkt oder permanent in einem fixen Abstand zueinander am ersten Gelenkhalter (8) und/oder die zweiten Schwenkachsen (11) permanent an einem gemeinsamen Angriffspunkt oder permanent in einem fixen Abstand zueinander am zweiten Gelenkhalter (10) angeordnet sind.

5. Hubvorrichtung (1) nach einem der Ansprüche 1 bis 4, **dadurch gekennzeichnet, dass** die Scherenarme (5) des ersten Paares (4) unter Zwischenschaltung einer Abfolge mehrerer Scherenzwischenarmpaare (12) schwenkbar mit den Scherenarmen (7) des zweiten Paares (6) verbunden sind und dass jedes der Scherenzwischenarmpaare (12) jeweils zwei einander kreuzend angeordnete Scherenzwischenarme (13) aufweist.

6. Hubvorrichtung (1) nach einem der Ansprüche 1 bis 5, **dadurch gekennzeichnet, dass** die Scherenarme (5) des ersten Paares (4), vorzugsweise ohne einander in irgendeiner Stellung zu kreuzen, voneinander weg und aufeinander zu um die ersten Schwenkachsen (9) am ersten Gelenkhalter (8) schwenkbar gelagert sind und/oder dass die Scherenarme (7) des zweiten Paares (6), vorzugsweise ohne einander in irgendeiner Stellung zu kreuzen, voneinander weg und aufeinander zu um die zweiten Schwenkachsen (11) am zweiten Gelenkhalter (10) schwenkbar gelagert sind.

7. Hubvorrichtung (1) nach einem der Ansprüche 1 bis 6, **dadurch gekennzeichnet, dass** die Scherenarme (5) des ersten Paares (4) über eine mechanische Kopplung ihrer am ersten Gelenkhalter (8) schwenkbar gelagerten Enden (17) bezüglich ihrer Schwenkwinkel (18) miteinander zwangsgekoppelt sind und/oder die Scherenarme (7) des zweiten Paares (6) über eine mechanische Kopplung ihrer am zweiten Gelenkhalter (10) schwenkbar gelagerten Enden (19) bezüglich ihrer Schwenkwinkel miteinander zwangsgekoppelt sind.

8. Hubvorrichtung (1) nach Anspruch 7, **dadurch gekennzeichnet, dass** zur mechanischen Kopplung an den, am ersten Gelenkhalter (8) schwenkbar gelagerten, Enden (17) der Scherenarme (5) des ersten Paares (4) jeweils zumindest ein Zahnrad oder Zahnradsektor (21) fixiert, vorzugsweise angeformt, ist, und/oder dass zur mechanischen Kopplung an den, am zweiten Gelenkhalter (10) schwenkbar gelagerten, Enden (19) der Scherenarme (7) des zweiten Paares (6) jeweils zumindest ein Zahnrad oder Zahnradsektor fixiert, vorzugsweise angeformt, ist.

9. Hubvorrichtung (1) nach Anspruch 8, **dadurch gekennzeichnet, dass** die an den Enden (17) der Scherenarme (5) des ersten Paares (4) jeweils fixierten, vorzugsweise angeformten, Zahnräder oder Zahnradsektoren (21) zur Zwangskopplung der Schwenkwinkel (18) der Scherenarme (5) des ersten Paares (4) direkt oder indirekt ineinander greifen, und/oder dass die an den Enden (19) der Scherenarme (7) des zweiten Paares (6) jeweils fixierten, vorzugsweise angeformten, Zahnräder oder Zahnradsektoren zur Zwangskopplung der Schwenkwinkel der Scherenarme (7) des zweiten Paares (6) direkt oder indirekt ineinander greifen.

10. Hubvorrichtung (1) nach einem der Ansprüche 1 bis 9, **dadurch gekennzeichnet, dass** die Scherenarme (5) des ersten Paares (4) über, vorzugsweise einachsige, Gelenke (16) schwenkbar mit den Scherenzwischenarmen (13) des Scherenzwischenarmpaares (12) oder eines der Scherenzwischenarmpaare (12) verbunden sind, und/oder dass die Scherenarme (7) des zweiten Paares (6) über, vorzugsweise einachsige, Gelenke (16) schwenkbar mit den Scherenzwischenarmen (13) des Scherenzwischenarmpaares (12) oder eines der Scherenzwischenarmpaare (12) verbunden sind, und/oder dass die Scherenzwischenarme (13) eines der Scherenzwischenarmpaare (12) über, vorzugsweise einachsige, Gelenke (16) schwenkbar mit den Scherenzwischenarmen (13) eines anschließenden der Scherenzwischenarmpaare (12) verbunden sind.

11. Hubvorrichtung (1) nach einem der Ansprüche 1 bis 10, **dadurch gekennzeichnet, dass** alle Gelenke (16), um die die Scherenarme (5) des ersten Paares (4) und die Scherenarme (7) des zweiten Paares (6) und die Scherenzwischenarme (13) des Scherenzwischenarmpaares (12) oder der Scherenzwischenarmpaare (12) schwenkbar sind, als einachsige Gelenke und/oder mit zueinander parallelen Schwenkachsen (9, 11) ausgeführt sind.

12. Hubvorrichtung (1) nach einem der Ansprüche 1 bis 11, **dadurch gekennzeichnet, dass** der erste Gelenkhalter (8) in allen Betriebsstellungen der Hubvorrichtung (1) immer über dem zweiten Gelenkhalter (10) und/oder der zweite Gelenkhalter (10) in allen Betriebsstellungen der Hubvorrichtung (1) immer über der Aufnahmevorrichtung (3) angeordnet ist.

13. Hubvorrichtung (1) nach einem der Ansprüche 1 bis 12, **dadurch gekennzeichnet, dass** der erste Gelenkhalter (8) und der zweite Gelenkhalter (10) beim Anheben und beim Absenken der Aufnahmevorrichtung (3) relativ zueinander ausschließlich in vertikalen Richtungen (23) bewegbar sind.

14. Hubvorrichtung (1) nach einem der Ansprüche 1 bis 13, **dadurch gekennzeichnet, dass** der erste Gelenkhalter (8) und der zweite Gelenkhalter (10) zum Anheben und zum Absenken der Aufnahmevorrichtung (3) über zumindest einen Vertikalantrieb (24), vorzugsweise in Form eines motorisch aufwickelbaren Hubseiles oder Hubriemens (25), miteinander gekoppelt sind.

15. Hubvorrichtung (1) nach einem der Ansprüche 1 bis 14, **dadurch gekennzeichnet, dass** die Hubvorrichtung (1) zumindest eine Drehvorrichtung (26) zum Drehen zumindest der Aufnahmevorrichtung (3) um eine vertikale Drehachse (27) aufweist.

## Claims

1. Lifting device (1) for lifting and lowering at least one plate-shaped workpiece (2) with at least one liftable and lowerable receiving device (3) for, in particular suspended, releasable fastening of the plate-shaped workpiece (2) on the lifting device (1) and with at least one first pair (4) of scissor arms (5) and with at least one second pair (6) of scissor arms (7), wherein the scissor arms (5) of the first pair (4) are mounted pivotably on a first articulation holder (8) of the lifting device (1) about first pivot axes (9) and the scissor arms (7) of the second pair (6) are mounted pivotably on a second articulation holder (10) of the lifting device (1) about second pivot axes (11) and wherein the first pivot axes (9) with respect to their position relative to each other are arranged fixed on the first articulation holder (8) and the second pivot axes (11) with respect to their position relative to each other are arranged fixed on the second articulation holder (10), **characterised in that** the scissor arms (5) of the first pair (4), with the interposition of at least one scissor intermediate arm pair (12), are pivotably connected to the scissor arms (7) of the second pair (6) and the at least one scissor intermediate arm pair (12) has two scissor intermediate arms (13) arranged crossing each other.

2. Lifting device (1) according to claim 1, **characterised in that** at least one crossing point (14) of the scissor intermediate arms (13), arranged crossing each other, of the scissor intermediate arm pair (12) moves exclusively along a single imaginary straight line (15) on the pivoting of the scissor arms (5) of the first pair (4) about the first pivot axes (9).

3. Lifting device (1) according to claim 1 or 2, **characterised in that** the scissor intermediate arms (13), arranged crossing each other, of the scissor intermediate arm pair (12) are connected to each other articulatedly at their crossing point (14) by means of a, preferably uniaxial, articulation (16).

4. Lifting device (1) according to one of claims 1 to 3, **characterised in that** the first pivot axes (9) are arranged permanently at a common point of application or permanently at a fixed distance from each other on the first articulation holder (8) and/or the second pivot axes (11) are arranged permanently at a common point of application or permanently at a fixed distance from each other on the second articulation holder (10).

5. Lifting device (1) according to one of claims 1 to 4, **characterised in that** the scissor arms (5) of the first pair (4) are pivotably connected, with the interposition of a series of a plurality of scissor intermediate arm pairs (12), to the scissor arms (7) of the second pair (6) and **in that** each of the scissor intermediate arm pairs (12) has in each case two scissor intermediate arms (13) arranged crossing each other.

6. Lifting device (1) according to one of claims 1 to 5, **characterised in that** the scissor arms (5) of the first pair (4) are mounted pivotably about the first pivot axes (9) on the first articulation holder (8) away from and towards each other preferably without crossing each other at any position and/or **in that** the scissor arms (7) of the second pair (6) are mounted pivotably about the second pivot axes (11) on the second articulation holder (10) away from and towards each other preferably without crossing each other at any position.

7. Lifting device (1) according to one of claims 1 to 6, **characterised in that** the scissor arms (5) of the first pair (4) are forcibly coupled with each other via a mechanical coupling of their ends (17), pivotably mounted on the first articulation holder (8), with respect to their pivot angles (18) and/or the scissor arms (7) of the second pair (6) are forcibly coupled with each other via a mechanical coupling of their ends (19), pivotably mounted on the second articulation holder (10), with respect to their pivot angles.

8. Lifting device (1) according to claim 7, **characterised in that** for the mechanical coupling at the ends (17), pivotably mounted on the first articulation holder (8), of the scissor arms (5) of the first pair (4), in each case at least one toothed wheel or toothed wheel sector (21) is fixed, preferably integrally formed, and/or **in that** for the mechanical coupling at the ends (19), pivotably mounted on the second articulation holder (10), of the scissor arms (7) of the second pair (6), in each case at least one toothed wheel or toothed wheel sector is fixed, preferably integrally formed.

9. Lifting device (1) according to claim 8, **characterised in that** the toothed wheels or toothed wheel sectors (21) in each case fixed, preferably integrally formed, on the ends (17) of the scissor arms (5) of the first pair (4), for forcibly coupling the pivot angles (18) of the scissor arms (5) of the first pair (4) engage directly or indirectly in each other, and/or **in that** the toothed wheel or toothed wheel sectors in each case fixed, preferably integrally formed, on the ends (19) of the scissor arms (7) of the second pair (6), for forcibly coupling the pivot angles of the scissor arms (7) of the second pair (6) engage directly or indirectly in each other.

10. Lifting device (1) according to one of claims 1 to 9, **characterised in that** the scissor arms (5) of the first pair (4) are pivotably connected to the scissor intermediate arms (13) of the scissor intermediate arm pair (12) or one of the scissor intermediate arm pairs (12) via, preferably uniaxial, articulations (16), and/or in that the scissor arms (7) of the second pair (6) are pivotably connected to the scissor intermediate arms (13) of the scissor intermediate arm pair (12) or one of the scissor intermediate arm pairs (12) via, preferably uniaxial, articulations (16), and/or **in that** the scissor intermediate arms (13) of one of the scissor intermediate arm pairs (12) are pivotably connected to the scissor intermediate arms (13) of an adjoining one of the scissor intermediate arm pairs (12) via, preferably uniaxial, articulations (16).

11. Lifting device (1) according to one of claims 1 to 10, **characterised in that** all articulations (16), about which the scissor arms (5) of the first pair (4) and the scissor arms (7) of the second pair (6) and the scissor intermediate arms (13) of the scissor intermediate arm pair (12) or the scissor intermediate arm pairs (12) are pivotable, are designed as uniaxial articulations and/or with mutually parallel pivot axes (9, 11).

12. Lifting device (1) according to one of claims 1 to 11, **characterised in that** the first articulation holder (8) in all operating positions of the lifting device (1) is always arranged above the second articulation holder (10) and/or the second articulation holder (10) in all operating positions of the lifting device (1) is always arranged above the receiving device (3).

13. Lifting device (1) according to one of claims 1 to 12, **characterised in that** the first articulation holder (8) and the second articulation holder (10) are movable relative to each other exclusively in vertical directions (23) on the lifting and on the lowering of the receiving device (3).

14. Lifting device (1) according to one of claims 1 to 13, **characterised in that** the first articulation holder (8) and the second articulation holder (10) are coupled to each other via at least one vertical drive (24), preferably in the form of a motor-driven lifting cable or lifting belt (25) capable of being wound up, for the lifting and for the lowering of the receiving device (3).

15. Lifting device (1) according to one of claims 1 to 14, **characterised in that** the lifting device (1) has at least one rotating device (26) for rotating at least the receiving device (3) about a vertical axis of rotation (27) .

## Revendications

1. Dispositif de levage (1) pour lever et abaisser au moins une pièce à travailler (2) en forme de plaque avec au moins un dispositif de réception (3) levable et abaissable destiné à la fixation, en particulier en suspension, détachable de la pièce à travailler (2) en forme de plaque au dispositif de levage (1) et avec au moins une première paire (4) de bras de ciseaux (5) et avec au moins une deuxième paire (6) de bras de ciseaux (7), les bras de ciseaux (5) de la première paire (4) étant montées sur un premier support articulé (8) du dispositif de levage (1) de manière pivotante autour de premiers axes de pivotement (9) et les bras de ciseaux (7) de la deuxième paire (6) étant montées sur un deuxième support articulé (10) du dispositif de levage (1) de manière pivotante autour de deuxièmes axes de pivotement (11) et les premiers axes de pivotement (9) étant arrangés, par rapport à leur position relative l'un par rapport à l'autre, de manière fixe sur un premier support articulé (8) et les deuxièmes axes de pivotement (11) étant arrangés, par rapport à leur position relative l'un par rapport à l'autre, de manière fixe sur le deuxième support articulé (10), **caractérisé en ce que** les bras de ciseaux (5) de la première paire (4) sont reliées, de manière pivotante, aux bras de ciseaux (7) de la deuxième paire (6) en intercalant au moins une paire de bras intermédiaires de ciseaux (12) et **en ce qu'**au moins une paire de bras intermédiaires de ciseaux (12) présente deux bras intermédiaires de ciseaux (13) se croisant l'un l'autre.

2. Dispositif de levage (1) selon la revendication 1, **caractérisé en ce qu'**au moins un point de croisement (14) des bras intermédiaires de ciseaux (13), se croisant l'un l'autre, de la paire de bras intermédiaires de ciseaux (12) se déplace exclusivement le long d'une unique droite imaginaire (15) lors du pivotement des bras de ciseaux (5) de la première paire (4).

3. Dispositif de levage (1) selon la revendication 1 ou la revendication 2, **caractérisé en ce que** les bras intermédiaires de ciseaux (13), se croisant l'un l'autre, de la paire de bras intermédiaires de ciseaux (12) sont reliés entre eux de manière articulée sur leur point de croisement (14) au moyen d'une articulation, (16) de préférence à un axe.

4. Dispositif de levage (1) selon l'une quelconque des revendications 1 à 3, **caractérisé en ce que** les premiers axes de pivotement (9) sont disposés de manière permanente sur un point d'attaque commun ou de manière permanente sur le premier support articulé (8) à une distance fixe l'un par rapport à l'autre et/ou les deuxièmes axes de pivotement (11) de manière permanente sur un point d'attaque commun ou de manière permanente sur le deuxième support articulé (10) à une distance fixe l'un par rapport à l'autre.

5. Dispositif de levage (1) selon l'une quelconque des revendications 1 à 4, **caractérisé en ce que** les bras de ciseaux (5) de la première paire (4), en intercalant une succession de plusieurs paires de bras intermédiaires de ciseaux (12), sont reliés de manière pivotante aux bras de ciseaux (7) de la deuxième paire (6) et **en ce que** chacune des paires de bras intermédiaires de ciseaux (12) présente deux bras intermédiaires de ciseaux (13) se croisant entre eux.

6. Dispositif de levage (1) selon l'une quelconque des revendications 1 à 5, **caractérisé en ce que** les bras de ciseaux (5) de la première paire (4) sont disposés sur le premier support articulé (8), de préférence sans se croiser dans n'importe quelle position, en s'écartant l'un de l'autre et en se rapprochant l'un de l'autre, de manière à pivoter autour des premiers axes de pivotement (9) et/ou **en ce que** les bras de ciseaux (7) de la deuxième paire (6) sont disposés sur le deuxième support articulé (10), de préférence sans se croiser dans n'importe quelle position, en s'écartant l'un de l'autre et en se rapprochant l'un de l'autre, de manière à pivoter autour des deuxièmes axes de pivotement (11).

7. Dispositif de levage (1) selon l'une quelconque des revendications 1 à 6, **caractérisé en ce que** les bras de ciseaux (5) de la première paire (4) sont accouplés en force l'un à l'autre par l'intermédiaire d'un accouplement mécanique de leurs extrémités (17) positionnées sur le premier support articulé (8) de manière à pivoter par rapport à leur angle de pivotement (18) et/ou les bras de ciseaux (7) de la deuxième paire (6) sont accouplés en force l'un à l'autre par l'intermédiaire d'un accouplement mécanique de leurs extrémités (19) positionnées sur le deuxième support articulé (10) de manière à pivoter par rapport à leur angle de pivotement.

8. Dispositif de levage (1) selon la revendication 7, **caractérisé en ce qu'**au moins une roue dentée ou un secteur de roue dentée (21) est fixé(e), de préférence aménagé(e), en vue de l'accouplement mécanique sur les extrémités (17), positionnées sur le premier support articulé (8) de manière à pivoter, des bras de ciseaux (5) de la première paire (4) et/ou **en ce qu'**au moins une roue dentée ou un secteur de roue dentée est fixé(e), de préférence aménagé(e), en vue de l'accouplement mécanique sur les extrémités (19), positionnées sur le deuxième support articulé (10) de manière à pivoter, des bras de ciseaux (7) de la deuxième paire (6).

9. Dispositif de levage (1) selon la revendication 8, **caractérisé en ce que** les roues dentées ou secteurs de roue dentée (21) fixé(e)s, de préférence aménagé(e)s, sur les extrémités (17) des bras de ciseaux (5) de la première paire (4) en vue de l'accouplement en force des angles de pivotement (18) des bras de ciseaux (5) de la première paire (4) s'engrènent l'un(e) dans l'autre directement ou indirectement et/ou **en ce que** les roues dentées ou secteurs de roue dentée fixé(e)s, de préférence aménagé(e)s, sur les extrémités (19) des bras de ciseaux (7) de la deuxième paire (6) en vue de l'accouplement en force des angles de pivotement des bras de ciseaux (7) de la deuxième paire (6) s'engrènent l'un(e) dans l'autre directement ou indirectement.

10. Dispositif de levage (1) selon l'une quelconque des revendications 1 à 9, **caractérisé en ce que** les bras de ciseaux (5) de la première paire (4) sont reliées, de manière à pouvoir pivoter, aux bras intermédiaires de ciseaux (13) de la paire de bras intermédiaires de ciseaux (12) ou à l'une des paires de bras intermédiaires de ciseaux (12) par l'intermédiaire d'articulations (16) de préférence à un seul axe, et/ou en ce que les bras de ciseaux (7) de la deuxième paire (6) sont reliées, de manière à pouvoir pivoter, aux bras intermédiaires de ciseaux (13) de la paire de bras intermédiaires de ciseaux (12) ou à l'une des paires de bras intermédiaires de ciseaux (12) par l'intermédiaire d'articulations (16) de préférence à un seul axe et/ou en ce que les bras intermédiaires de ciseaux (13) de l'une des paires de bras intermédiaires de ciseaux (12) sont reliées, de manière à pouvoir pivoter, à une paire adjacente parmi les paires de bras intermédiaires de ciseaux (12) par l'intermédiaire d'articulations (16) de préférence à un seul axe.

11. Dispositif de levage (1) selon l'une quelconque des revendications 1 à 10, **caractérisé en ce que** toutes les articulations (16), autour desquelles les bras de ciseaux (5) de la première paire (4) et les bras de ciseaux (7) de la deuxième paire (6) et les bras intermédiaires de ciseaux (13) de la paire de bras intermédiaires de ciseaux (12) ou des paires de bras intermédiaires de ciseaux (12) peuvent pivoter, sont des articulations à un seul axe et/ou comportant des axes de pivotement (9, 11) parallèles entre eux.

12. Dispositif de levage (1) selon l'une quelconque des revendications 1 à 11, **caractérisé en ce que** le premier support articulé (8) est toujours disposé, dans toutes les positions de fonctionnement du dispositif de levage (1), au-dessus du deuxième support articulé (10) et/ou le deuxième support articulé (10) est toujours disposé, dans toutes les positions de fonctionnement du dispositif de levage (1), au-dessus du dispositif de réception (3).

13. Dispositif de levage (1) selon l'une quelconque des revendications 1 à 12, **caractérisé en ce que** le premier support articulé (8) et le deuxième support articulé (10) peuvent être déplacés l'un par rapport à l'autre exclusivement dans les sens verticaux (23) lors du levage et de l'abaissement du dispositif de réception (3).

14. Dispositif de levage (1) selon l'une quelconque des revendications 1 à 13, **caractérisé en ce que** le premier support articulé (8) et le deuxième support articulé (10) destinés au levage et à l'abaissement du dispositif de réception (3) sont couplés l'un avec l'autre par l'intermédiaire d'au moins un entraînement vertical (24), de préférence en forme d'un câble de levage ou d'une courroie de levage (25) motorisé(e).

15. Dispositif de levage (1) selon l'une quelconque des revendications 1 à 14, **caractérisé en ce qu'**il présente au moins un dispositif rotatif (26) pour faire tourner au moins le dispositif de réception (3) autour d'un axe de rotation (27) vertical.
